# EUROPEAN PATENT APPLICATION

(11) **EP 4 169 809 A1**
(43) Date of publication of application: **26.04.2023**
(21) Application number: 22201268.4
(22) Date of filing: 13.10.2022
(51) Int. Cl.: B62D 15/02, B60W 30/06, E04H 6/24, G06Q 10/02, G08G 1/16, G06Q 30/0283

(54) **PARKING CONTROL SYSTEM, PARKING CONTROL METHOD, AND PARKING CONTROL PROGRAM**

(30) Priority: 20.10.2021 JP 2021171871
(71) Applicant: Mitsubishi Heavy Industries, Ltd., Tokyo 1008332 (JP)
(72) Inventor: TAKAKUWA, Yoshinao, Kobe-shi, 652-8585 (JP); FUKUSHIMA, Daisuke, Kobe-shi, 652-8585 (JP); KATOU, Tomohiko, Kobe-shi, 652-8585 (JP); HANASHIMA, Akira, Kobe-shi, 652-8585 (JP); OKUTANI, Kenta, Kobe-shi, 652-8585 (JP)
(74) Representative: Studio Torta S.p.A.

(57) **Abstract**

Provided are a parking control system, a parking control method, and a parking control program that can improve user convenience of the parking facility. The parking control system performs a process to move a vehicle between a berth 1 where at least any one of getting in and getting out of the vehicle is performed and a parking area 7 where a vehicle is parked, and the parking control system includes: a buffer control unit configured to perform a process to move a vehicle between the berth 1 and a buffer section 20 capable of having vehicles arranged in the parking area 7; and a parking control unit configured to perform a process to move a vehicle between the buffer section 20 and a parking section 30 capable of having vehicles arranged in the parking area 7 including a region farther than the buffer section 20 from the berth 1.

## Description

### BACKGROUND

### 1. TECHNICAL FIELD

The present disclosure relates to a parking control system, a parking control method, and a parking control program.

### 2. DESCRIPTION OF RELATED ART

For example, premises such as a shopping mall have a parking facility. When visiting such premises, a user loads his/her vehicle into a parking facility and then unloads the vehicle out of the parking facility when going home.

International Publication No. 2021/054327 discloses that, when a cancellation request is issued before an automated car reaches a first target position, a second target position is set, and the car is guided to the second target position.

International Publication No. 2021/054327 is an example of the related art.

For example, a parking facility may be of valet parking. In valet parking, when a vehicle is stopped at a berth, the vehicle is automatically transported from the berth by an AGV or the like. However, there is a demand for alleviating congestion or improving flexibility in utilization, and it is important to further improve user convenience.

In International Publication No. 2021/054327, when a cancellation instruction is issued during a process, user convenience may be improved by setting a target position different from the original target position and guiding the user thereto. However, this can be applied to only cases where a cancellation instruction is issued, and there is room for further improvement on user convenience in a parking facility.

### BRIEF SUMMARY

The present disclosure has been made in view of such circumstances and intends to provide a parking control system, a parking control method, and a parking control program that can improve user convenience of a parking facility.

The first aspect of the present disclosure is a parking control system configured to perform a motion process to move a vehicle between a stopping area in which at least any one of getting in the vehicle and getting out of the vehicle is performed and a parking area in which a vehicle is parked, and the parking control system includes: a buffer control unit configured to perform a motion process to move a vehicle between the stopping area and a buffer section capable of having a plurality of vehicles arranged in the parking area; and a parking control unit configured to perform a motion process to move a vehicle between the buffer section and a parking section capable of having a plurality of vehicles arranged in the parking area including a region farther than the buffer section from the stopping area.

The second aspect of the present disclosure is a parking control method for a parking control system configured to perform a motion process to move a vehicle between a stopping area in which at least any one of getting in the vehicle and getting out of the vehicle is performed and a parking area in which a vehicle is parked, and the parking control method includes: performing a motion process to move a vehicle between the stopping area and a buffer section capable of having a plurality of vehicles arranged in the parking area; and performing a motion process to move a vehicle between the buffer section and a parking section capable of having a plurality of vehicles arranged in the parking area including a region farther than the buffer section from the stopping area.

The third aspect of the present disclosure is a parking control program for a parking control system configured to perform a motion process to move a vehicle between a stopping area in which at least any one of getting in the vehicle and getting out of the vehicle is performed and a parking area in which a vehicle is parked, and the parking control program causes a computer to perform processes of: performing a motion process to move a vehicle between the stopping area and a buffer section capable of having a plurality of vehicles arranged in the parking area; and performing a motion process to move a vehicle between the buffer section and a parking section capable of having a plurality of vehicles arranged in the parking area including a region farther than the buffer section from the stopping area.

According to the present disclosure, an advantageous effect that can improve user convenience of a parking facility is achieved.

### BRIEF DESCRIPTION OF THE SEVERAL VIEWS OF THE DRAWINGS

Fig. 1 is a diagram illustrating an overview of valet parking according to one embodiment of the present disclosure.
Fig. 2 is a diagram illustrating the overview of valet parking according to one embodiment of the present disclosure.
Fig. 3 is a diagram illustrating the overview of valet parking according to one embodiment of the present disclosure.
Fig. 4 is a diagram illustrating the overview of valet parking according to one embodiment of the present disclosure.
Fig. 5 is a diagram illustrating the overview of valet parking according to one embodiment of the present disclosure.
Fig. 6 is a diagram illustrating a parking facility according to one embodiment of the present disclosure.
Fig. 7 is a schematic configuration diagram illustrating an example of a hardware configuration of a parking control system according to one embodiment of the present disclosure.
Fig. 8 is a function block diagram illustrating functions of the parking control system according to one embodiment of the present disclosure.
Fig. 9 is a diagram illustrating a ratio change of sections according to one embodiment of the present disclosure.
Fig. 10 is a diagram illustrating a ratio change of sections according to one embodiment of the present disclosure.
Fig. 11 is a diagram illustrating a ratio change of sections according to one embodiment of the present disclosure.
Fig. 12 is a diagram illustrating a flow of vehicle entry according to one embodiment of the present disclosure.
Fig. 13 is a diagram illustrating a flow of vehicle exit according to one embodiment of the present disclosure.
Fig. 14 is a diagram illustrating a case of taking out a vehicle according to one embodiment of the present disclosure.
Fig. 15 is a flowchart illustrating an example of a procedure of a behavior analysis process according to one embodiment of the present disclosure.
Fig. 16 is a diagram illustrating an example of an overall system configuration according to one embodiment of the present disclosure.

### DETAILED DESCRIPTION

One embodiment of a parking control system, a parking control method, and a parking control program according to the present disclosure will be described below with reference to the drawings.

### Overview of Valet Parking

The present embodiment will be described with an example of valet parking as a parking facility. For example, such a parking facility is provided to premises such as a shopping mall. In valet parking, a vehicle 10 is transported by an automated guided vehicle (AGV) 6.

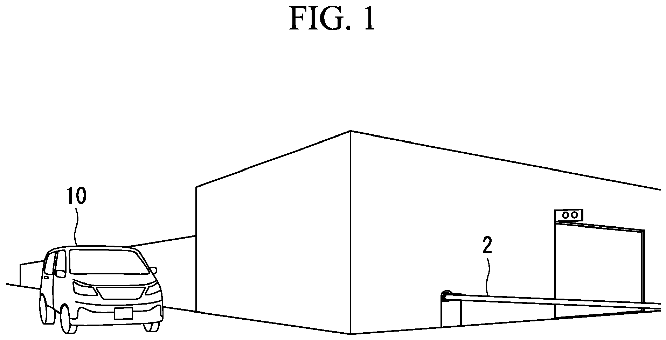

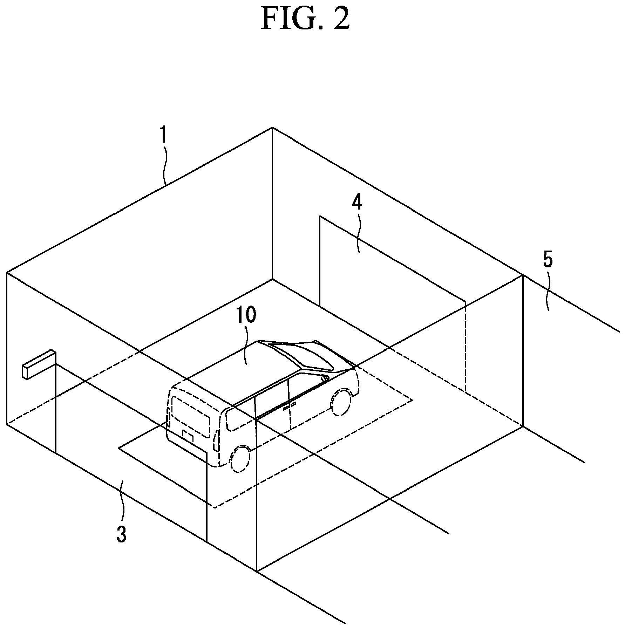

In the event of vehicle entry, for example, a user makes a vehicle entry reservation and drives through a crossing gate 2 provided at the entrance of the parking facility at the reserved time to enter the parking facility, as illustrated in Fig. 1. The crossing gate 2 may be any system that detects arrival of the vehicle 10 at the entrance of a parking facility without being limited to the illustrated crossing gate 2 and may be a system with GPS or a sensor, for example. The user then drives through a passage and stops the vehicle 10 in a stopping area (hereafter, referred to as a "berth") 1, as illustrated in Fig. 2. For example, a plurality of berths 1 are provided, and the user may identify a berth 1 available for stopping (available berth) from a traffic signal or the like. Upon stopping the vehicle 10 at the berth 1, the user gets out of the vehicle 10 and goes out of the berth 1. For example, a room (waiting room) 5 is provided adjacent to the berth 1. After safety is ensured (for example, no person being present is ensured) inside the berth 1, a door 3 on the passage side in the berth 1 is closed.

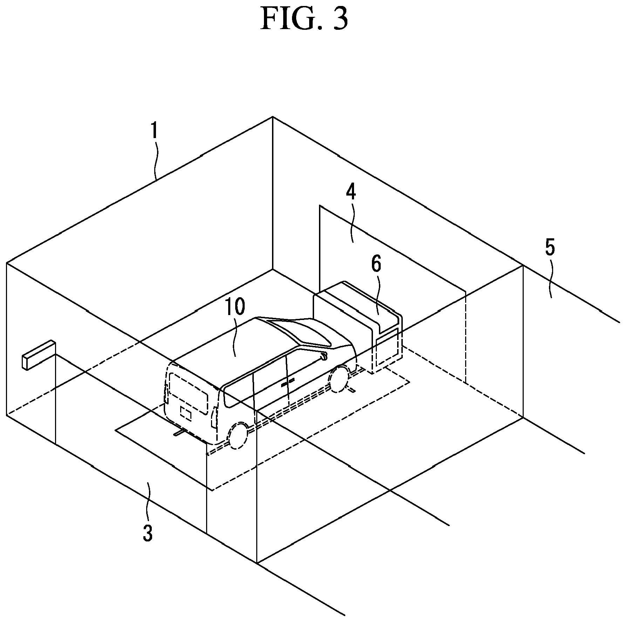

Then, as illustrated in Fig. 3, a door 4 on a parking area 7 side in the berth 1 is opened, and the AGV 6 enters the berth 1 and transports the vehicle 10 to the parking area 7. Details of transport of the vehicle 10 in the parking area 7 will be described later.

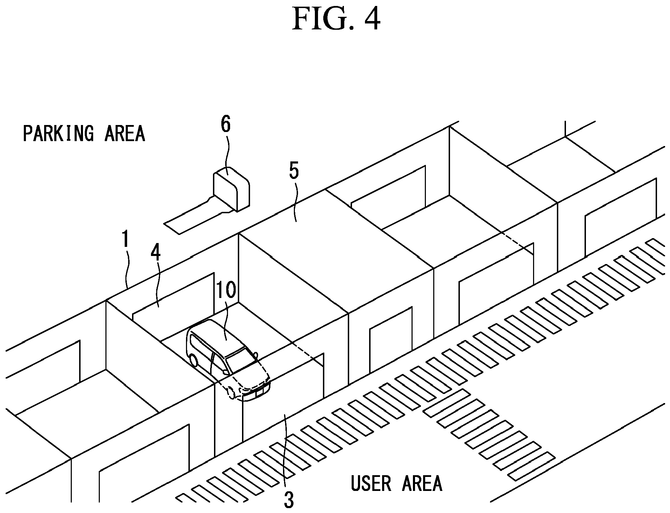

Vehicle entry of the vehicle 10 is performed in such a way. All the user has to do is to stop the vehicle 10 at the berth 1 near premises such as a shopping mall, which improves user convenience. As illustrated in Fig. 4, since the parking area 7 and the user area are separated from each other, user safety is improved.

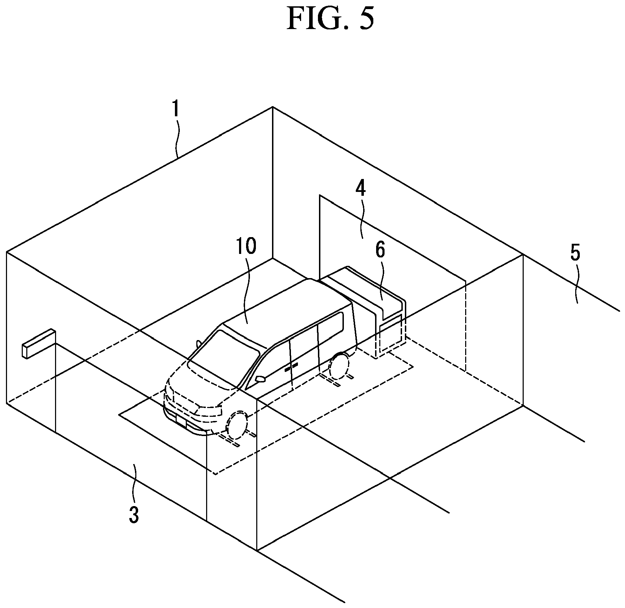

In the event of vehicle exit, in response to the user making a vehicle exit reservation, vehicle exit of the vehicle 10 is performed at the reserved time. Specifically, as illustrated in Fig. 5, the door 4 on the parking area 7 side in the berth 1 is opened, and the AGV 6 transports the vehicle 10 from the parking area 7 to the berth 1. Details of transport of the vehicle 10 in the parking area 7 will be described later. After the vehicle 10 is transported to the berth 1 and is ready for exit, the user gets in the vehicle 10 and leaves the parking facility.

Although the case where the user makes a vehicle entry reservation and a vehicle exit reservation in advance has been described in the above example, the user may perform the process for vehicle entry or vehicle exit at a terminal of the parking facility after arriving at the parking facility. Further, a process for a case where the user forgot to make a reservation or the like will be described later.

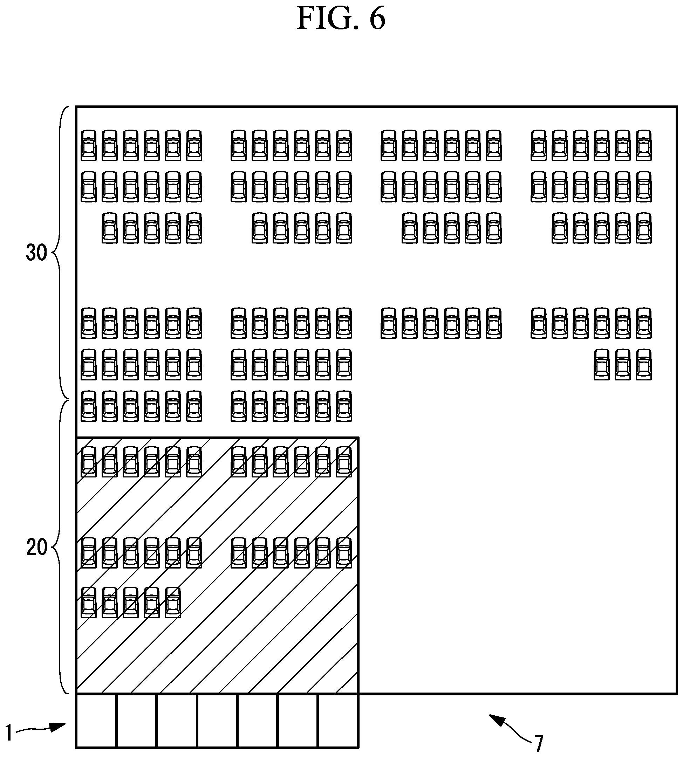

The present embodiment will be described with a parking facility (a parking lot) illustrated in Fig. 6 as a specific example. As illustrated in Fig. 6, the berths 1 and the parking area 7 are provided in the parking facility. Each berth 1 is an area in which at least any one of the user getting in a vehicle and the user getting out of a vehicle may be performed. That is, in the berth 1, the vehicle 10 is driven in or out by the user (driver).

The parking area 7 is an area in which the vehicle 10 is parked (stored). A buffer section 20 and a parking section 30 are provided in the parking area 7. The buffer section 20 is a section in which the vehicle 10 is temporarily arranged. The parking section 30 is a section in which the vehicle 10 is parked (stored).

The buffer section 20 is provided adjacent to the berths 1, as illustrated in Fig. 6, for example. In contrast, the parking section 30 is set at a farther position than the buffer section 20 from the berths 1. That is, the buffer section 20 is a section close to the berths 1, and the parking section 30 is a section distant from the berths 1. Specifically, the parking section 30 is a section including a region that is farther than the buffer section 20 from the berths 1. That is, as long as the parking section 30 is a section including a region that is farther than the buffer section 20 from the berths 1, a part of the parking section 30 may be closely adjacent to the berths 1 as with the buffer section 20, as illustrated in Fig. 6, for example.

The parking section 30 has a higher density in arrangement of the vehicles 10 than the buffer section 20. That is, the parking section 30 is set to have a greater number of vehicles that can be arranged per unit area than the buffer section 20. For example, in the buffer section 20, the vehicles 10 are aligned adjacent side by side in a row, and two of such rows of vehicles are arranged in the front-rear direction of the vehicle 10. Note that, although a case where the AGV 6 is configured to lift a vehicle from the front or rear side of the vehicle is an example in the present embodiment, the AGV 6 may be configured to lift the vehicle 10 from the left or right side. In such a case, in the buffer section 20, the vehicles 10 are aligned adjacent in the front-rear direction in a line, and two of such lines of vehicles are arranged in the lateral direction of the vehicle 10, for example. Various arrangement schemes can be applied to the arrangement scheme in the buffer section 20 in accordance with the way of moving the vehicles 10. Such arrangement makes it easier to move the vehicles 10. In the parking section 30, the vehicles 10 are aligned adjacent side by side in a row, and three of such rows of vehicles are arranged in the front-rear direction of the vehicle 10, for example. This arrangement enables more vehicles 10 to be parked in the parking section 30.

Note that, although the parking facility illustrated in Fig. 6 has been described as an example in the present embodiment, the embodiment is not limited to the parking facility having the configuration of Fig. 6. The vehicles 10 are transported by the AGV 6 in the above example, however, the vehicle 10 may be moved by an automated function when the vehicle 10 is an automated car, for example, without limited to the above. Further, a targeted parking facility may be a mechanical parking lot (mechanical multistory parking lot), and the form of the parking facility is not limited.

### Parking Control System

A parking control system 40 performs a vehicle entry/exit process on the vehicle 10 in the parking facility.

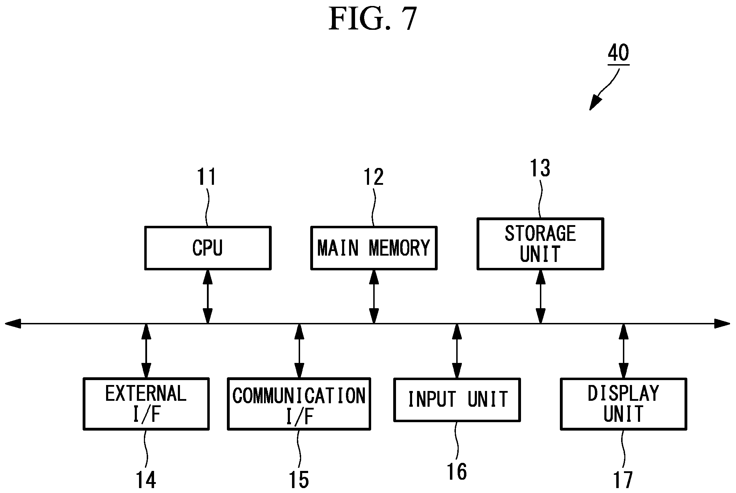

Fig. 7 is a schematic configuration diagram illustrating an example of a hardware configuration of the parking control system 40 according to one embodiment of the present disclosure. As illustrated in Fig. 7, the parking control system 40 is a so-called computer and includes a central processing unit (CPU) 11, a main memory 12, a storage unit 13, an external interface 14, a communication interface 15, an input unit 16, a display unit 17, and the like, for example. These units are connected to each other directly or indirectly via buses and perform various processes in cooperation with each other.

The CPU 11 performs the overall control by using operating system (OS) stored in the storage unit 13 connected via a bus and executes various programs stored in the storage unit 13 to perform various processes, for example.

The main memory 12 is formed of a writable memory such as a cache memory, a random access memory (RAM), or the like and used as a working area where the execution program of the CPU 11 is loaded, processing data is written by the execution program, or the like, for example.

The storage unit 13 is a non-transitory computer readable storage medium and is, for example, a read only memory (ROM), a hard disk drive (HDD), a flash memory, or the like. For example, the storage unit 13 stores OS used to control the entire device, such as Windows (registered trademark), iOS (registered trademark), Android (registered trademark), or the like, basic input/output system (BIOS), various device driver used for operating peripherals in a hardware manner, various application software, and various data and files or the like. Further, the storage unit 13 stores programs used for implementing various processes and various data required for implementing various processes.

The external interface 14 is an interface for connection to an external device. An example of the external device may be an external monitor, a USB memory, an external HDD, or the like. Note that, although only one external interface is depicted in the example illustrated in Fig. 7, a plurality of external interfaces may be provided.

The communication interface 15 functions as an interface that connects to a network to communicate with other devices and transmits and receives information.

For example, the communication interface 15 communicates with other devices via a wired connection or a wireless connection. The wireless communication may be communication using Bluetooth (registered trademark), Wi-Fi, a dedicated communication protocol, or the like. An example of the wired communication may be a wired local area network (LAN) or the like.

The input unit 16 is a user interface used for providing an instruction, such as a keyboard, a mouse, a touchpad, or the like, for example.

The display unit 17 is a liquid crystal display, an organic electroluminescence (EL) display, or the like, for example. Further, the display unit 17 may be a touch panel display on which a touch panel is overlapped.

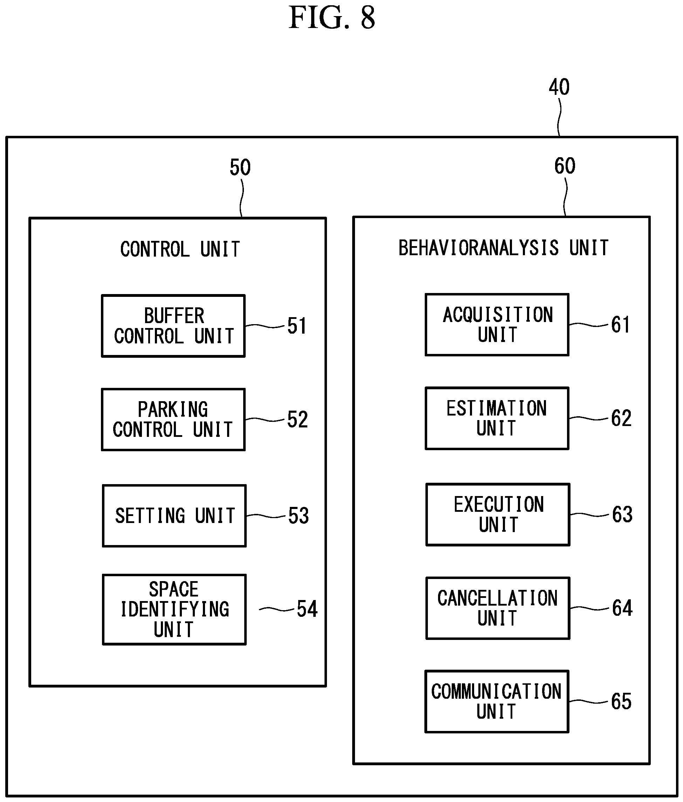

Fig. 8 is a function block diagram illustrating functions of the parking control system 40. As illustrated in Fig. 8, the parking control system 40 includes a control unit 50 and a behavior analysis unit 60 as the main configuration.

Functions implemented by each of these units are implemented by processing circuitry, for example. For example, a series of processes for implementing functions illustrated below are stored in the storage unit 13 in a form of a program as an example, and various functions are implemented when the CPU 11 loads such a program into the main memory 12 and performs information processing and calculation processes thereon.

Note that an applicable form of the program may be a form in which a program is installed in advance in the storage unit 13, a form in which a program is provided in a state of being stored in another computer readable storage medium, a form in which a program is delivered via a wired or wireless communication scheme, or the like. The computer readable storage medium may be a magnetic disk, a magneto-optical disk, a CD-ROM, a DVD-ROM, a semiconductor memory, or the like.

### Function of Control Unit 50

The control unit 50 performs a motion process related to parking of the vehicle 10, specifically, performs a process to move the vehicle 10 between the stopping area and the parking area 7. The motion process of the vehicle 10 refers to controlling the motion of the vehicle 10 in a specific sense but includes not directly controlling the vehicle 10, such as transmitting a signal for motion to the vehicle 10. In the present embodiment, a case where the AGV 6 is controlled to move the vehicle 10 is presented as an example.

As illustrated in Fig. 8, the control unit 50 includes a buffer control unit 51, a parking control unit 52, a setting unit 53, and a space identifying unit 54 as the main configuration.

The buffer control unit 51 causes the vehicle 10 to be moved between the berth 1 and the buffer section 20 in the parking area 7. Specifically, when performing vehicle entry of the vehicle 10, the buffer control unit 51 causes the vehicle 10 in the berth 1 to be moved to the buffer section 20. Then, when performing vehicle exit of the vehicle 10, the buffer control unit 51 causes the vehicle 10 in the buffer section 20 to be moved to the berth 1.

The parking control unit 52 causes the vehicle 10 to be moved between the buffer section 20 and the parking section 30. Specifically, when performing vehicle entry of the vehicle 10, the parking control unit 52 causes the vehicle 10 in the buffer section 20 to be moved to the parking section 30. Then, when performing vehicle exit of the vehicle 10, the parking control unit 52 causes the vehicle 10 in the parking section 30 to be moved to the buffer section 20.

Although the buffer control unit 51 and the parking control unit 52 control the AGV 6 to move the vehicle 10, another method may be applied as long as motion of the vehicle 10 can be controlled. For example, when the vehicle 10 is an automated car, the buffer control unit 51 and the parking control unit 52 may transmit motion path information (motion information) to the automated car to control the motion of the vehicle 10. The motion path information is information indicating a path from a starting point to a target point of the vehicle 10. Coordinates in accordance with GPS, a camera-based instruction, or a relative position instruction (a moving distance to the right, a moving distance to the front, or the like) may be used for the control. The motion path information may be divided and transmitted at each point. Note that, without being limited to the motion path information, motion target point information having information on a target point without including information on a path may be used. That is, the motion path information, the motion target point information, or the like may be used, as the motion information (information about motion of the vehicle 10).

In such a case, it is preferable that the buffer control unit 51 and the parking control unit 52 transmit motion path information (motion information) to an automated car and, when the motion path information is authenticated by the user, the vehicle 10 move in accordance with the motion path information. That is, the component on the parking control system 40 side passes motion path information (a destination and a course) to the vehicle 10, the user then confirms and authenticates the motion path information on the vehicle 10 side, and when authentication is made, the vehicle 10 moves in accordance with the motion path information under the control on the vehicle 10 side. In such a way, even when an automated car is of interest, the user can leave the vehicle 10 in the parking facility without worry by confirming the motion path information. Note that, if the motion path information is not authenticated on the vehicle 10 side, the parking control system 40 may propose another motion path information or may propose guidance of the vehicle 10 to exit the parking facility.

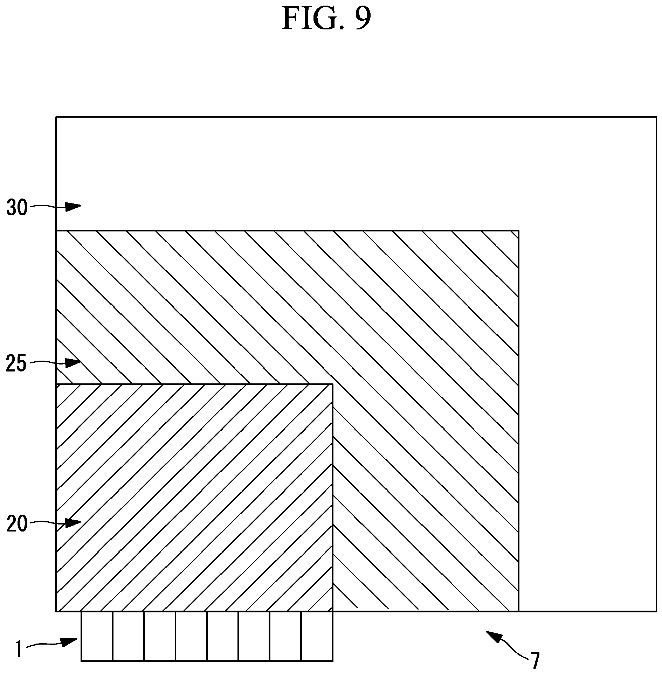

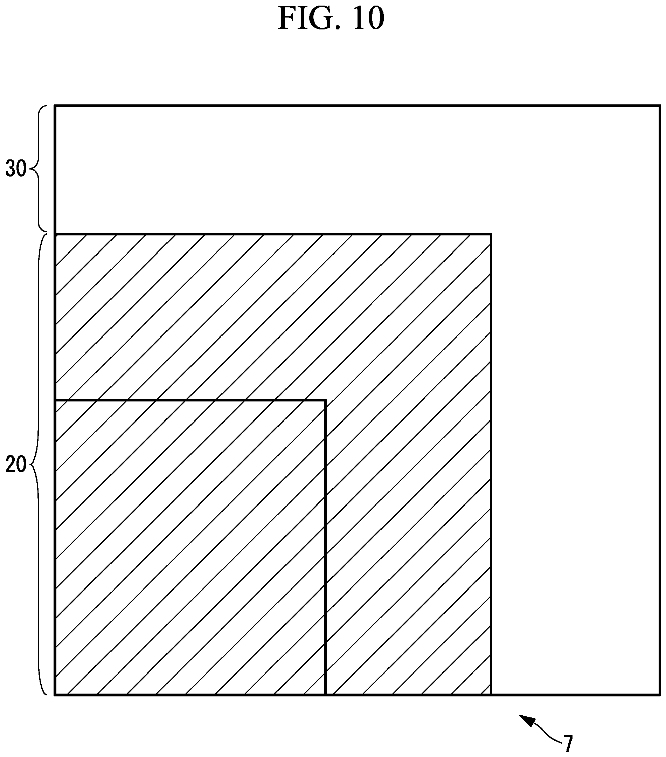

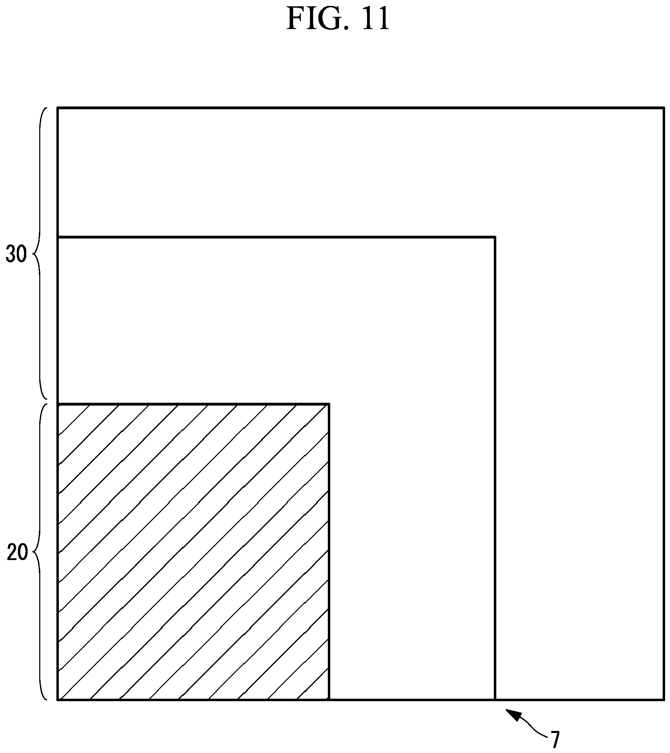

The setting unit 53 changes a ratio between the buffer section 20 and the parking section 30 (occupancy ratio) in the parking area 7. That is, the setting unit 53 changes the areas of the buffer section 20 and the parking section 30. Specifically, as illustrated in Fig. 9, in addition to the buffer section 20 and the parking section 30, a dual-use section 25 is provided in the parking area 7. In such a case, the setting unit 53 sets the dual-use section 25 as the buffer section 20 or the parking section 30 to change the ratio. Specifically, as illustrated in Fig. 10, when the dual-use section 25 is set as the buffer section 20, the buffer section 20 is expanded. As illustrated in Fig. 11, when the dual-use section 25 is set as the parking section 30, the parking section 30 is expanded.

The setting unit 53 changes the ratio based on at least any one of a time period of day, the status of vehicle entry reservations, and the status of vehicle exit reservations. For example, when the ratio change is based on a time period of day, the buffer section 20 may be expanded as illustrated in Fig. 10 during a normal time (a time period of day other than a busy time period of day), and the parking section 30 may be expanded as illustrated in Fig. 11 during an expected busy time (a busy time period of day) to increase the number of vehicles that can be parked. Note that all the sections may be set as the parking section 30 during a busier time (the busiest time). The normal time is, for example, a weak day, the busy time is, for example, Saturday and Sunday, and the busiest time is, for example, year-end and new year holidays or Golden Week (consecutive holidays). When the ratio change is based on the status of vehicle entry reservations, the buffer section 20 may be expanded if the status of vehicle entry reservations is less than a predetermined threshold, and the parking section 30 may be expanded to increase the number of vehicles that can be parked if the status of vehicle entry reservations is greater than or equal to the predetermined threshold. When the ratio change is based on the status of vehicle exit reservations, the buffer section 20 may be expanded if the status of vehicle exit reservations is greater than or equal to a predetermined threshold, and the parking section 30 may be expanded to increase the number of vehicles that can be parked if the status of vehicle exit reservations is less than the predetermined threshold.

Note that the setting unit 53 may set a manned parking section. The manned parking section is a section in which the vehicle 10 is moved and parked by a person (that is, a general parking section). In such a case, visualization of the boundary of the manned parking section enables the driver to park the vehicle 10 in the manned parking section. The visualization can be made by utilizing virtual mapping or the like, for example. The visualization may be displayed when the vehicle 10 moves. Further, an object (for example, a partition) may be provided protruded from the ground or the ceiling.

Further, in each section in the parking area 7, the section may be divided into subsections each for similar types of vehicles in combination with car model information. For example, light cars may be grouped to the same section, and thereby the vehicles 10 can be efficiently arranged with suppressed variation in the size thereof.

In such a way, a plurality of vehicle storage sections for different purposes are set in the parking facility, the setting unit 53 changes the occupancy ratio of respective vehicle storage sections. The purpose means a use of a section. Thus, for example, the vehicle storage sections can be set in accordance with the purposes, such as the buffer section 20, the parking section 30, the manned parking section, a section allocated on a car model basis, or the like described above. Further, a change of the ratio of sections for respective purposes can improve flexibility in utilization. As described above, the setting unit 53 may change the occupancy ratio by allocating one of the vehicle storage sections to the dual-use section 25. Further, the setting unit 53 may change the occupancy ratio based on at least any one of a time period of day, the status of vehicle entry reservations, and the status of vehicle exit reservations.

The space identifying unit 54 identifies an available space in the parking area 7. That is, it is possible to efficiently move the vehicle 10 by identifying an available space by the space identifying unit 54. In a method of identifying an available space, various sensors such as a camera provided to the parking facility, a sensor provided to the AGV 6, or the like can be utilized. For example, one or more identified available spaces may be virtually mapped, and such a virtual map may be shared.

### Specific Example of Vehicle Entry

Next, a specific example of vehicle entry control will be described.

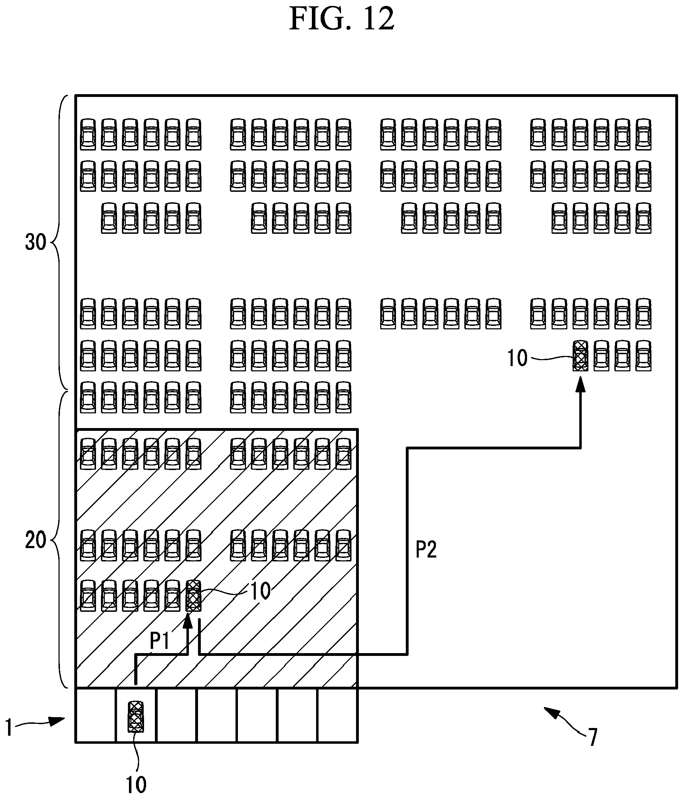

In the event of vehicle entry of the vehicle 10, it is preferable that the berths 1 be not filled with vehicles 10 waiting for entry. Thus, the parking control system 40 performs vehicle entry control so that vehicle entry of the vehicles 10 are efficiently performed (mode to prioritize vehicle entry). Fig. 12 is a diagram illustrating a flow of vehicle entry.

For example, when there is an entering vehicle in a predetermined vehicle entry time period of day such as a vehicle entry busy time period of day, the vehicle 10 in the berth 1 is moved to the buffer section 20 (P1 in Fig. 12).

Further, in a predetermined time period of day (for example, a vehicle entry off-peak time period of day) after the vehicle entry time period of day (the vehicle entry busy time period of day), the vehicle 10 in the buffer section 20 is moved to the parking section 30 (P2 in Fig. 12). Note that, even when it is out of the predetermined time period of day after the vehicle entry time period of day, the vehicle 10 may be moved from the buffer section 20 to the parking section 30 when there is an AGV 6 not performing the vehicle entry process.

The vehicle 10 in the berth 1 is temporarily transported to the near buffer section 20 in vehicle entry in such a way, which reduces the AGV transport time (vehicle motion time) and suppresses the berths 1 from being full of vehicles 10.

### Specific Example of Vehicle Exit

Next, a specific example of vehicle exit control will be described.

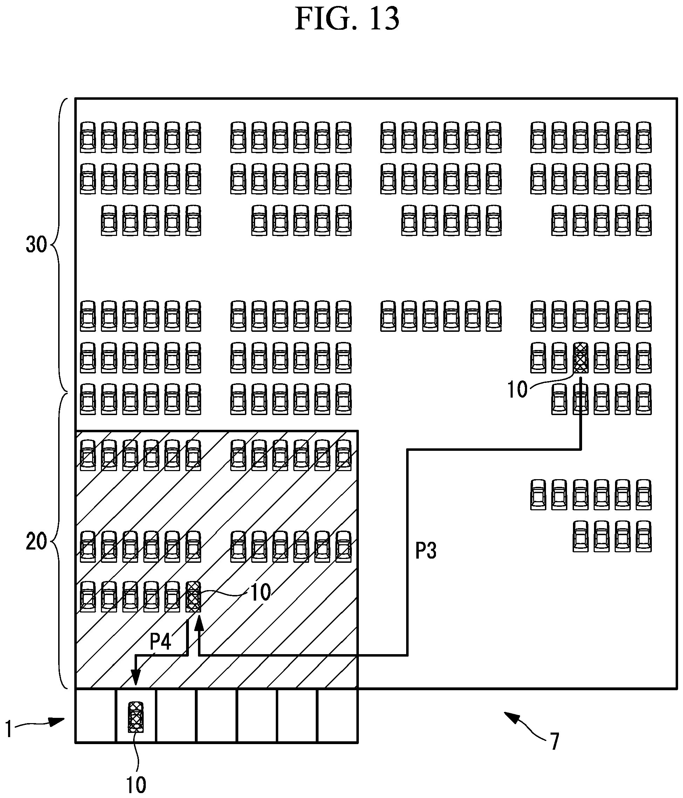

In the event of vehicle exit of the vehicle 10, a shorter waiting time for vehicle exit is preferable. Thus, the parking control system 40 performs vehicle exit control so that vehicle exit of the vehicles 10 are efficiently performed (mode to prioritize vehicle exit). Fig. 13 is a diagram illustrating a flow of vehicle exit.

For example, in response to a vehicle exit reservation (vehicle exit reservation time), the vehicle 10 in the parking section 30 is moved to the buffer section 20 (P3 in Fig. 13). Specifically, motion control is performed a predetermined time before the vehicle exit reservation time. Further, even when no vehicle exit reservation is made, the vehicle 10 in the parking section 30 may be moved to the buffer section 20 in accordance with user behavior information. The user behavior information will be described later.

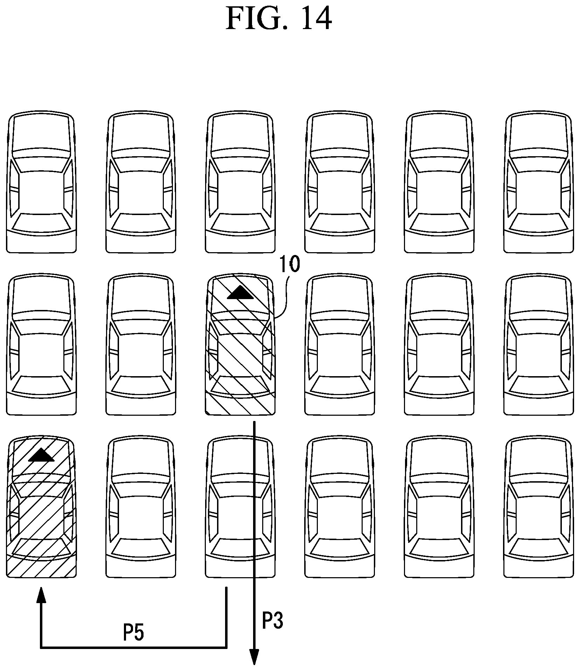

When the vehicle 10 is moved from the parking section 30, if vehicles 10 are parked both in front of and behind a vehicle 10 to be moved (on the traveling path of a vehicle 10 to be moved), as illustrated in Fig. 13, for example, some of the vehicles 10 will be moved as illustrated in Fig. 14, for example. Specifically, a vehicle parked on the traveling path of the vehicle to be moved (10 in Fig. 14) is moved (P5 in Fig. 14), and the vehicle to be moved is then moved (P3 in Fig. 14).

The vehicle 10 in the buffer section 20 is then moved to the berth 1 based on a user arrival timing at the berth 1 (P4 in Fig. 13). For example, control is performed so that the vehicle 10 is moved to the berth 1 at the user arrival timing. The arrival timing may be set based on the vehicle exit reservation time or may be set in accordance with detected user behavior indicating an intention of vehicle exit.

The exiting vehicle 10 is temporarily moved to the buffer section 20 near the berth 1 to be ready for vehicle exit in such a way, which can reduce the waiting time for vehicle exit.

### Function of Behavior Analysis Unit 60

The user may make a vehicle entry reservation or a vehicle exit reservation before using the parking facility, but the user may forget to make a reservation. Thus, the behavior analysis unit 60 analyzes user behavior to be able to process vehicle entry or vehicle exit.

As illustrated in Fig. 8, the behavior analysis unit 60 includes an acquisition unit 61, an estimation unit 62, an execution unit 63, a cancellation unit 64, and a notification unit 65 as the main configuration.

The acquisition unit 61 acquires behavior information on the user of the parking facility. The behavior information (behavior related information) is information related to user behavior, in particular, information related to use of the parking facility. That is, the behavior information is behavior information on the user for which future use of the parking facility can be estimated. Note that, since the behavior information is the behavior information from which future use of the parking facility can be estimated, the behavior information does not include behavior of the user directly indicating use of the parking facility, for example, behavior such as a vehicle entry reservation or a vehicle exit reservation made by the user.

The behavior information includes behavior information for predicting vehicle exit and behavior information for predicting vehicle entry.

The behavior information for predicting vehicle exit is at least any one of user position information, parking facility use time, and purchase information on the user in the premises to which the parking facility is provided. The user position information represents the user position in the premises, for example. The parking facility use time is the elapsed time from vehicle entry of the vehicle 10. The purchase information on a user is information about an item purchased by the user in the premises, for example.

As the behavior information for predicting vehicle exit, in addition to the above, at least any one of season information, temperature information, weather information, passenger information, event information on the premises, and opening-hours information on premises may be used. Each of the season information, the temperature information, and the weather information is information on the area where the parking facility or the premises are located. The passenger information is information as to whether or not there is a passenger, whether or not there is a child, or the like. The event information on the premises is schedule information on an event held at the premises, for example.

The behavior information for predicting vehicle entry is user position information. For example, the user position information is position information on a user, in particular position information on a user around the parking facility.

As the behavior information for predicting vehicle entry, in addition to the above, at least any one of season information, temperature information, weather information, event information on the premises, and opening-hours information on premises may be used.

The acquisition unit 61 acquires user behavior information as described above. The acquisition source is not limited as long as necessary information can be acquired. For example, information can be acquired by various methods, as with information acquired by a camera provided to the parking facility or the premises, information on use of a facility in the premises, or the like. In particular, for the purchase information, it is preferable to reference POS information (POS system) of the premises. It is also possible to use information acquired by various sensors such as GPS provided to the vehicle 10. When there is another system collecting information about behavior, the behavior information may be acquired from this system.

The estimation unit 62 estimates, based on the acquired behavior information, a probability that the user will perform vehicle exit or vehicle entry. Specifically, the estimation unit 62 has a function of being input with each acquired behavior information and outputting a vehicle exit expectation value or a vehicle entry expectation value.

For example, the estimation unit 62 is a trained model that has been trained by machine learning, that is, a model trained by using a data set of prepared each behavior information (input) and a vehicle exit expectation value or a vehicle entry expectation value (output) as training data. It is also possible to further perform machine learning by using data accumulated as output results from the trained model. The estimation unit 62 is not limited to a trained model, and another scheme may be used as long as an expectation value can be estimated from behavior information.

As the scheme for probability estimation, the Bayesian estimation known as a typical scheme may be used. For example, by using the Bayes theorem from a probability P(A) that the user performs vehicle exit after staying for a certain period, a probability P(B) that the user performs a particular behavior (such as drops at particular premises), and a probability P(B|A) that the user who actually performed vehicle exit had taken the particular behavior immediately before the vehicle exit, it is possible to find a probability P(A|B) that the user who took the particular behavior after staying for the certain period performs vehicle exit immediately after the particular behavior. In such a way, to find P(A|B), it is required to find P(A), P(B), and P(B|A) in advance by using the past observed data, assumed values, or the like. Thus, it is also possible to use this method after certain operation data is collected in the parking facility. Note that information collected at another parking facility may be used if possible. As the amount or the type of collected data increases, the likelihood of probability estimation increases, and accuracy can be improved.

In such a way, from user behavior, the estimation unit 62 estimates the possibility that vehicle entry or vehicle exit will be performed.

The execution unit 63 performs a process related to vehicle exit or a process related to vehicle entry in the parking facility based on the probability estimated by the estimation unit 62. Specifically, the execution unit 63 executes the process related to vehicle exit when a vehicle exit expectation value that is greater than a predetermined value is estimated. Further, the execution unit 63 executes the process related to vehicle entry when a vehicle entry expectation value that is greater than a predetermined value is estimated. The execution unit 63 executes the process by outputting an instruction to the control unit 50 described above.

The process related to vehicle exit is a process for making a vehicle exit reservation or for moving the vehicle 10 parked in the parking facility to come close to the position for vehicle exit (berth 1). The vehicle exit reservation is the same as a vehicle exit reservation manually made by the user, which is a process to move the vehicle 10 in the parking area 7 to the berth 1. The vehicle exit reservation time may also be automatically set. The process to move the vehicle 10 to come close to the berth 1 is a process to change the position of the vehicle 10 so that the distance from the position (current position) of the vehicle 10 in the parking area 7 to the berth 1 becomes shorter. Specifically, this process is a process to move the vehicle 10 in the parking section 30 to the buffer section 20 as described above (P3 in Fig. 13). After moved to the buffer section 20, the vehicle 10 may be moved to the berth 1 by a user operation, or arrival of the user at the berth 1 may be estimated from the behavior information as described above, and the vehicle 10 may be moved to the berth 1, accordingly.

By detecting an indication of an intention of vehicle exit from user behavior and performing a process related to vehicle exit in such a way, it is possible to increase the efficiency of the vehicle exit process. Since the process related to vehicle exit is automatically performed in accordance with user behavior, the waiting time for vehicle exit is reduced even for the user who forgot to manually make a vehicle exit reservation, and this can improve convenience.

The process related to vehicle entry is a process for making a vehicle entry reservation or for reducing the time required for vehicle entry. The vehicle entry reservation is the same as the vehicle entry reservation manually made by the user, which is a process to ensure an available berth 1 to perform vehicle entry. A vehicle entry reservation time may also be automatically set. The process for reducing the time required for vehicle entry is a process for ensuring an available berth 1 or retaining a vehicle exit reservation (a process to prioritize vehicle entry or an interruption of a vehicle entry reservation).

By detecting an indication of an intention of vehicle entry from user behavior and performing a process related to vehicle entry in such away, it is possible to increase the efficiency of the vehicle entry process. Since the process related to vehicle entry is automatically performed in accordance with user behavior, the waiting time for vehicle entry is reduced even for the user who forgot to manually make a vehicle entry reservation, and this can improve convenience.

As an example of execution of a process by using a probability, for example, it is assumed that the probability of vehicle exit is estimated to be 50% for two time periods of day: 15:00 to 15:30 and 17:00 to 17:30 (each probability for other time periods is 0%). In such a way, each probability is defined for each predetermined divided time period having the origin at a certain time. The time of an origin may be a time the user performed vehicle entry or may be a particular time (for example, 9 o'clock sharp). In the above example, since the probability in the time period of 15:00 to 15:30 is higher than 10% that is a predetermined value used for determining whether or not to execute the process related to vehicle exit, the execution unit 63 executes the process related to vehicle exit in the previous time period (for example, 14:30 to 15:00). Although the example in which the predetermined value used for determining whether or not to execute the process related to vehicle exit is 10% is illustrated, this value can be set to any value. If no vehicle exit is performed in the time period of 15:00 to 15:30, the process related to vehicle exit may be cancelled, and the process related to vehicle exit may be again performed in the time period (16:30 to 17:00) before the time period (17:00 to 17:30) in which the probability increases. Even when no vehicle exit is performed in the time period of 15:00 to 15:30, the process related to vehicle exit is not necessarily required to be cancelled when the berth 1 is available. For example, it is assumed that the process related to vehicle exit is performed, the vehicle 10 is moved from the parking section 30 to the buffer section 20, the vehicle 10 is then moved from the buffer section 20 to the berth 1 before the time period (15:00 to 15:30), but the vehicle exit is not performed (no vehicle exit operation is performed) in the time period (15:00 to 15:30), and the berth 1 then becomes unavailable. In such a case, the vehicle 10 may be returned to the buffer section 20 (further, the vehicle 10 may be returned to the parking section 30 when the buffer section 20 becomes unavailable), or the vehicle 10 may be moved to another parking place (not the berth 1).

Note that, although the case where a day is divided into respective time periods has been described in the above example, the embodiment is not limited thereto. The embodiment is also applicable to a case of estimating a probability that the user will perform vehicle exit (or vehicle entry) without specifying a time period of day (a case of finding a probability that the user will merely perform vehicle exit (or vehicle entry)).

The cancellation unit 64 performs a cancellation process when the behavior probability decreases after the process is executed by the execution unit 63. That is, the process related to vehicle exit is cancelled when the vehicle exit expectation value decreases after the process related to vehicle exit is executed with the vehicle exit expectation value being greater than or equal to a predetermined value A1 (when the vehicle exit expectation value becomes less than or equal to a predetermined value B1 set less than the predetermined value A1). Further, the process related to vehicle entry is cancelled when the vehicle entry expectation value decreases after the process related to vehicle entry is executed with the vehicle entry expectation value being greater than or equal to a predetermined value A2 (when the vehicle entry expectation value becomes less than or equal to a predetermined value B2 set less than the predetermined value A2).

The cancellation process may be a process to undo or suspend a process executed by the execution unit 63. For example, the cancellation process may be a process to unload the vehicle 10 into a parking space nearby when the cancellation process is executed during the AGV 6 carrying the vehicle 10 for vehicle exit or a process to return the vehicle 10 to the original parking space. During the AGV 6 operating alone without carrying a vehicle, the operation of the AGV 6 may be suspended.

The cancellation unit 64 is not necessarily required to be operated based on a probability. For example, the cancellation process on a process may be performed when, after the process is executed by the execution unit 63, there is behavior that matches a cancellation condition set in advance as user behavior not to perform vehicle entry or user behavior not to perform vehicle exit. The cancellation condition corresponds to a case where the user moves away from the berth 1 or the like, for example.

When a process is executed by the execution unit 63, the notification unit 65 provides a notification to the user. That is, when an indication of an intention of vehicle exit or vehicle entry is detected based on behavior information, and a preceding process for vehicle exit or vehicle entry is performed, a notification to the user enables the user to recognize that the process is to be performed. Alternatively, a notification is provided to the user before execution of a process, and the user may select whether or not to execute the process.

### Flow of Behavior Analysis

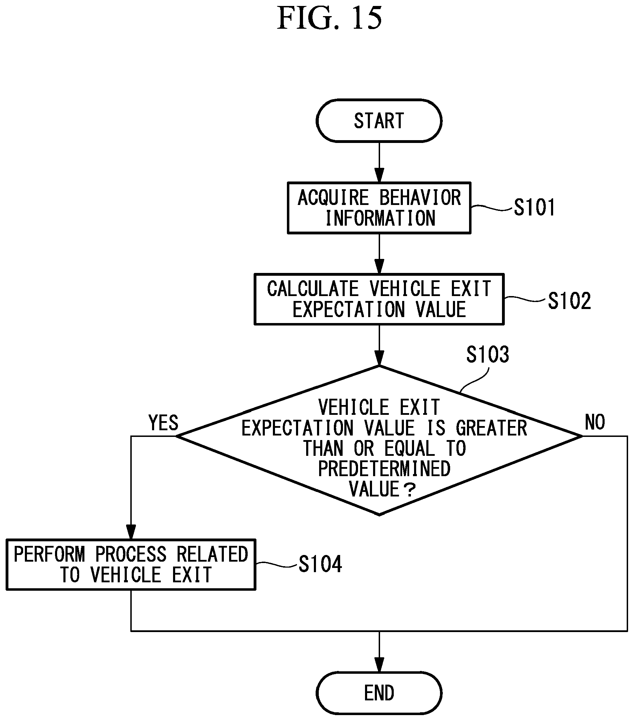

Next, an example of a behavior analysis process described above will be described with reference to Fig. 15. Fig. 15 is a flowchart illustrating an example of a procedure of the behavior analysis process according to the present embodiment. The flow of Fig. 15 is repeatedly performed at a predetermined control cycle. Although the example corresponds to a case of performing vehicle exit as an example in Fig. 15, vehicle entry is also processed in a similar manner.

First, behavior information is acquired (S101). A vehicle exit expectation value is then calculated based on the behavior information (S102). It is then determined whether or not the vehicle exit expectation value is greater than or equal to a predetermined value (S103). If the vehicle exit expectation value is less than the predetermined value (S103, NO), the process ends. If the vehicle exit expectation value is greater than or equal to the predetermined value (S103, YES), a process related to vehicle exit is performed (S104), and the process ends.

In such a way, the vehicle entry/exit process is enabled based on behavior information on the user.

### Modified Example of Behavior Analysis Unit 60

In the above example, the case where a vehicle exit expectation value or a vehicle entry expectation value is estimated by the estimation unit 62 has been described. However, the embodiment is not limited to the case of estimating an expectation value as long as it is possible to predict vehicle exit or vehicle entry performed by the user. For example, when the user who performed vehicle entry of the vehicle 10 comes close to the berth 1, the process related to vehicle exit may be performed assuming that the user will perform vehicle exit of the vehicle 10. That is, with reference to behavior information, when behavior that matches predetermined behavior is performed, the execution unit 63 executes the process. In such a case, the estimation unit 62 is not necessarily required to be provided in the behavior analysis unit 60.

The predetermined behavior is behavior from which vehicle exit by the user is expected (vehicle exit behavior) or behavior from which vehicle entry by the user is expected (vehicle entry behavior). The behavior for vehicle exit or the behavior for vehicle entry is set in advance.

For example, the vehicle exit behavior (with respect to the user who performed vehicle entry of the vehicle 10) is that the user is near the berth 1 (the user has returned), that an average parking time in the parking facility has elapsed, that the user purchased a frozen food, an ice cream, or a fresh food, or the like and can be set in advance.

For example, the vehicle entry behavior (with respect to the user who has not yet performed vehicle entry of the vehicle 10) is that the user is near the berth 1 and can be set in advance or the like.

### Example of System Configuration

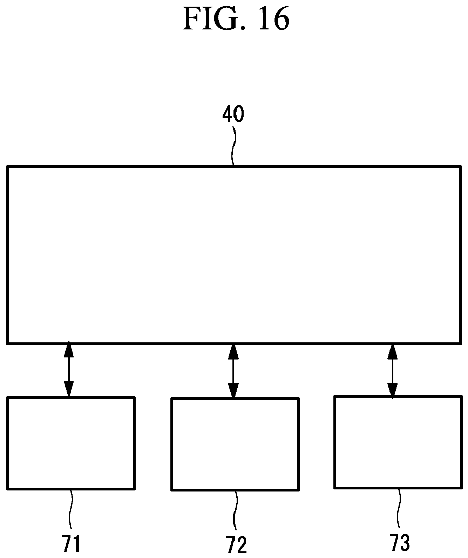

Fig. 16 is a diagram illustrating an example of the overall system configuration. As illustrated in Fig. 16, the parking control system 40 is connected to a premises-side system 71, a user terminal 72, a weather information server 73, or the like and can transmit or receive information. For example, the parking control system 40 acquires, from the premises-side system 71, information collected by the premises-side system 71 such as camera or POS system-based information, event information, or the like. Further, the parking control system 40 may acquire position information from the user terminal 72 or may acquire various information such as a temperature from the weather information server 73.

Note that, although the stopping area has been described as the berth 1 in the present embodiment, any area where at least any one of getting in a vehicle and getting out of a vehicle is performed can be applied to the stopping area without being limited to the berth 1. For example, the stopping area can be set anywhere in a town. Such a setting enables the vehicle 10 to be moved to and parked in the parking area 7 from anywhere in the town. Further, motion from the stopping area to the parking area 7 is not limited to directly motion from the stopping area to the parking area 7 and may be stepwise motion to the parking area 7 via a predetermined point.

As described above, according to a parking control system, a parking control method, and a parking control program of the present embodiment, a plurality of vehicles 10 can be arranged in the buffer section 20 and the parking section 30, the parking section 30 includes a region farther than the buffer section 20 from the berths 1, and motion processes to move the vehicle 10 between the berth 1 and the buffer section 20 and between the buffer section 20 and the parking section 30 are performed, respectively. This makes it possible to alleviate congestion in the parking facility. That is, it is possible to improve user convenience of the parking facility.

The parking section 30, which is the farther than the buffer section 20 from the berths 1, is set to have a higher density in the arrangement of the vehicles 10 than the buffer section 20, and this makes it possible to suppress congestion in the parking facility and efficiently utilize the parking area.

In the event of vehicle entry, by moving the vehicle 10 from the berth 1 to the buffer section 20 and then moving the vehicle 10 from the buffer section 20 to the parking section 30, it is possible to temporarily arrange the entering vehicle in the buffer section 20, and it is thus possible to suppress congestion of the berths 1. By moving the vehicle 10 from the berth 1 to the buffer section 20 in a predetermined vehicle entry time period of day, and after the vehicle entry time period of day, moving the vehicle 10 from the buffer section 20 to the parking section 30, it is possible to suppress congestion of the berths 1 in the predetermined vehicle entry time period of day. The predetermined vehicle entry time period of day is a vehicle entry busy time period of day, for example.

In the event of vehicle exit, by moving the vehicle 10 from the parking section 30 to the buffer section 20 and then moving the vehicle 10 from the buffer section 20 to the berth 1, it is possible to temporarily arrange the exiting vehicle in the buffer section 20, and it is thus possible to reduce the waiting time for vehicle exit. In the event of vehicle exit, by moving the vehicle 10 from the section to the buffer section 20 in accordance with user behavior information or a vehicle exit reservation time, it is possible to temporarily arrange the exiting vehicle in the buffer section 20, and it is thus possible to reduce the waiting time for vehicle exit.

It is possible to improve flexibility in utilization of the parking facility by changing the ratio. Such active use of the dual-use section 25 enables the ratio change with a simple process. A change of the ratio based on at least any one of a time period of day, the status of vehicle entry reservations, and the status of vehicle exit reservations makes it possible to use the parking facility in accordance with a situation.

The present disclosure is not limited to only the embodiments described above, and various modified implementations are possible within the scope not departing from the spirit of the invention.

The parking control system, the parking control method, and the parking control program illustrated in each embodiment described above are recognized as follows, for example.

A parking control system (40) of the present disclosure is a parking control system configured to perform a motion process to move a vehicle between a stopping area (1) in which at least any one of getting in the vehicle and getting out of the vehicle is performed and a parking area (7) in which a vehicle (10) is parked, the parking control system including: a buffer control unit (51) configured to perform a motion process to move a vehicle between the stopping area and a buffer section (20) capable of having a plurality of vehicles arranged in the parking area; and a parking control unit (52) configured to perform a motion process to move a vehicle between the buffer section and a parking section (30) capable of having a plurality of vehicles arranged in the parking area including a region farther than the buffer section from the stopping area.

According to the parking control system of the present disclosure, a plurality of vehicles can be arranged in the buffer section and the parking section, the parking section includes a region farther than the buffer section from the stopping area, and motion processes to move the vehicle between the stopping area and the buffer section and between the buffer section and the parking section are performed, respectively. This makes it possible to alleviate congestion in the parking facility. That is, it is possible to improve user convenience of the parking facility.

In the parking control system of the present disclosure, the parking section may have a higher density in arrangement of vehicles than the buffer section.

According to the parking control system of the present disclosure, the parking section, which is the farther than the buffer section from the stopping area, is set to have a higher density in the arrangement of the vehicles than the buffer section, and this makes it possible to suppress congestion in the parking facility and efficiently utilize the parking area.

In the parking control system of the present disclosure, when vehicle entry is performed, the buffer control unit may perform a motion process to move the vehicle from the stopping area to the buffer section, and the parking control unit may perform a motion process to move the vehicle from the buffer section to the parking section.

According to the parking control system of the present disclosure, in the event of vehicle entry, by moving the vehicle from the stopping area to the buffer section and then moving the vehicle from the buffer section to the parking section, it is possible to temporarily arrange the entering vehicle in the buffer section, and it is thus possible to suppress congestion of the stopping area.

In the parking control system of the present disclosure, the buffer control unit may perform the motion process to move the vehicle from the stopping area to the buffer section in a predetermined vehicle entry time period of day, and the parking control unit may perform the motion process to move the vehicle from the buffer section to the parking section in a predetermined time period of day after the vehicle entry time period of day.

According to the parking control system of the present disclosure, by moving the vehicle from the stopping area to the buffer section in a predetermined vehicle entry time period of day, and after the vehicle entry time period of day, moving the vehicle from the buffer section to the parking section, it is possible to suppress congestion of stopping area in the predetermined vehicle entry time period of day. The predetermined vehicle entry time period of day is a vehicle entry busy time period of day, for example.

In the parking control system of the present disclosure, when vehicle exit is performed, the parking control unit may perform a motion process to move the vehicle from the parking section to the buffer section, and the buffer control unit may perform a motion process to move the vehicle from the buffer section to the stopping area.

According to the parking control system of the present disclosure, in the event of vehicle exit, by moving the vehicle from the parking section to the buffer section and then moving the vehicle from the buffer section to the stopping area, it is possible to temporarily arrange the exiting vehicle in the buffer section, and it is thus possible to reduce the waiting time for vehicle exit.

In the parking control system of the present disclosure, the parking control unit may perform the motion process to move the vehicle from the parking section to the buffer section in accordance with user behavior information or a vehicle exit reservation time.

According to the parking control system of the present disclosure, in the event of vehicle exit, by moving the vehicle from the section to the buffer section in accordance with user behavior information or a vehicle exit reservation time, it is possible to temporarily arrange the exiting vehicle in the buffer section, and it is thus possible to reduce the waiting time for vehicle exit.

In the parking control system of the present disclosure, the buffer control unit may perform the motion process to move the vehicle from the buffer section to the stopping area based on a user arrival timing at the stopping area.

According to the parking control system of the present disclosure, by moving the vehicle from the buffer section to the stopping area based on a user arrival timing at the stopping area, it is possible to reduce the waiting time for vehicle exit.

The parking control system of the present disclosure may include a space identifying unit (54) configured to identify an available space in the parking area.

According to the parking control system of the present disclosure, it is possible to recognize the current situation by identifying an available space.

In the parking control system of the present disclosure, the buffer control unit and the parking control unit may perform the motion process to move the vehicle by using an AGV.

According to the parking control system of the present disclosure, it is possible to efficiently move the vehicle by using the AGV to perform the motion process to move the vehicle.

In the parking control system of the present disclosure, the vehicle may be an automated car, and the buffer control unit and the parking control unit may transmit motion information to the automated car, and when the motion information is authorized by a user, the vehicle may move in accordance with the motion information.

According to the parking control system of the present disclosure, when the vehicle is an automated car, motion information is transmitted to obtain user authentication, and it is thus possible to improve safety of vehicle motion.

The parking control system of the present disclosure may include a setting unit (53) configured to change a ratio between the buffer section and the parking section in the parking area.

According to the parking control system of the present disclosure, it is possible to improve flexibility in utilization of the parking facility by changing the ratio.

In the parking control system of the present disclosure, the setting unit may change the ratio by setting a dual-use section (25) in the parking area as the buffer section or the parking section.

According to the parking control system of the present disclosure, the ratio can be changed with a simple process by active use of the dual-use section.

In the parking control system of the present disclosure, the setting unit may change the ratio based on at least any one of a time period of day, status of vehicle entry reservations, and status of vehicle exit reservations.

According to the parking control system of the present disclosure, use of the parking facility in accordance with a situation is made possible by a change of the ratio based on at least any one of a time period of day, the status of vehicle entry reservations, and the status of vehicle exit reservations.

In a parking control system of the present disclosure, a plurality of vehicle storage sections for different purposes are set in a parking facility, and the parking control system includes a setting unit configured to change an occupancy ratio of each of the vehicle storage sections.

According to the parking control system of the present disclosure, it is possible to improve flexibility in utilization of the parking facility by changing the occupancy ratio.

In the parking control system of the present disclosure, the setting unit may change the occupancy ratio by allocating one of the vehicle storage sections to a dual-use section.

According to the parking control system of the present disclosure, the ratio can be changed with a simple process by active use of the dual-use section.

In the parking control system of the present disclosure, the setting unit may change the occupancy ratio based on at least any one of a time period of day, status of vehicle entry reservations, and status of vehicle exit reservations.

According to the parking control system of the present disclosure, use of the parking facility in accordance with a situation is made possible by a change of the ratio based on at least any one of a time period of day, the status of vehicle entry reservations, and the status of vehicle exit reservations.

A parking control method of the present disclosure is a parking control method for a parking control system configured to perform a motion process to move a vehicle between a stopping area in which at least any one of getting in the vehicle and getting out of the vehicle is performed and a parking area in which a vehicle is parked, and the parking control method includes: performing a motion process to move a vehicle between the stopping area and a buffer section capable of having a plurality of vehicles arranged in the parking area; and performing a motion process to move a vehicle between the buffer section and a parking section capable of having a plurality of vehicles arranged in the parking area including a region farther than the buffer section from the stopping area.

In a parking control method of the present disclosure, a plurality of vehicle storage sections for different purposes are set in a parking facility, and the parking control method includes changing an occupancy ratio of each of the vehicle storage sections.

A parking control program of the present disclosure is a parking control program for a parking control system configured to perform a motion process to move a vehicle between a stopping area in which at least any one of getting in the vehicle and getting out of the vehicle is performed and a parking area in which a vehicle is parked, and the parking control program causes a computer to perform processes of: performing a motion process to move a vehicle between the stopping area and a buffer section capable of having a plurality of vehicles arranged in the parking area; and performing a motion process to move a vehicle between the buffer section and a parking section capable of having a plurality of vehicles arranged in the parking area including a region farther than the buffer section from the stopping area.

In a parking control program of the present disclosure, a plurality of vehicle storage sections for different purposes are set in a parking facility, and the parking control program causes a computer to perform a process of changing an occupancy ratio of each of the vehicle storage sections.

### [List of References]

- 1:: berth (stopping area)
- 2:: crossing gate
- 3, 4:: door
- 5:: room
- 6:: AGV
- 7:: parking area
- 10:: vehicle
- 11:: CPU
- 12:: main memory
- 13:: storage unit
- 14:: external interface
- 15:: communication interface
- 16:: input unit
- 17:: display unit
- 20:: buffer section
- 25:: dual-use section
- 30:: parking section
- 40:: parking control system
- 50:: control unit
- 51:: buffer control unit
- 52:: parking control unit
- 53:: setting unit
- 54:: space identifying unit
- 60:: behavior analysis unit
- 61:: acquisition unit
- 62:: estimation unit
- 63:: execution unit
- 64:: cancellation unit
- 65:: notification unit
- 71:: premises-side system
- 72:: terminal
- 73:: weather information server

## Claims

1. A parking control system configured to perform a motion process to move a vehicle between a stopping area in which at least any one of getting in the vehicle and getting out of the vehicle is performed and a parking area in which a vehicle is parked, the parking control system comprising:
a buffer control unit configured to perform a motion process to move a vehicle between the stopping area and a buffer section capable of having a plurality of vehicles arranged in the parking area; and
a parking control unit configured to perform a motion process to move a vehicle between the buffer section and a parking section capable of having a plurality of vehicles arranged in the parking area including a region farther than the buffer section from the stopping area.

2. The parking control system according to claim 1, wherein the parking section has a higher density in arrangement of vehicles than the buffer section.

3. The parking control system according to claim 1 or 2, wherein when vehicle entry is performed,
the buffer control unit performs a motion process to move the vehicle from the stopping area to the buffer section, and
the parking control unit performs a motion process to move the vehicle from the buffer section to the parking section.

4. The parking control system according to claim 3,
wherein the buffer control unit performs the motion process to move the vehicle from the stopping area to the buffer section in a predetermined vehicle entry time period of day, and
wherein the parking control unit performs the motion process to move the vehicle from the buffer section to the parking section in a predetermined time period of day after the vehicle entry time period of day.

5. The parking control system according to any one of claims 1 to 4, wherein when vehicle exit is performed,
the parking control unit performs a motion process to move the vehicle from the parking section to the buffer section, and
the buffer control unit performs a motion process to move the vehicle from the buffer section to the stopping area.

6. The parking control system according to claim 5, wherein the parking control unit performs the motion process to move the vehicle from the parking section to the buffer section in accordance with user behavior information or a vehicle exit reservation time.

7. The parking control system according to claim 5 or 6, wherein the buffer control unit performs the motion process to move the vehicle from the buffer section to the stopping area based on a user arrival timing at the stopping area.

8. The parking control system according to any one of claims 1 to 7 further comprising a space identifying unit configured to identify an available space in the parking area.

9. The parking control system according to any one of claims 1 to 8, wherein the buffer control unit and the parking control unit perform the motion process to move the vehicle by using an AGV.

10. The parking control system according to any one of claims 1 to 8,
wherein the vehicle is an automated car, and
wherein the buffer control unit and the parking control unit transmit motion information to the automated car, and when the motion information is authorized by a user, the vehicle moves in accordance with the motion information.

11. The parking control system according to any one of claims 1 to 10 further comprising a setting unit configured to change a ratio between the buffer section and the parking section in the parking area.

12. The parking control system according to claim 11, wherein the setting unit changes the ratio by setting a dual-use section in the parking area as the buffer section or the parking section.

13. The parking control system according to claim 11 or 12, wherein the setting unit changes the ratio based on at least any one of a time period of day, status of vehicle entry reservations, and status of vehicle exit reservations.

14. A parking control system in which a plurality of vehicle storage sections for different purposes are set in a parking facility, the parking control system comprising a setting unit configured to change an occupancy ratio of each of the vehicle storage sections.

15. The parking control system according to claim 14, wherein the setting unit changes the occupancy ratio by allocating one of the vehicle storage sections to a dual-use section.

16. The parking control system according to claim 14 or 15, wherein the setting unit changes the occupancy ratio based on at least any one of a time period of day, status of vehicle entry reservations, and status of vehicle exit reservations.

17. A parking control method for a parking control system configured to perform a motion process to move a vehicle between a stopping area in which at least any one of getting in the vehicle and getting out of the vehicle is performed and a parking area in which a vehicle is parked, the parking control method comprising:
performing a motion process to move a vehicle between the stopping area and a buffer section capable of having a plurality of vehicles arranged in the parking area; and
performing a motion process to move a vehicle between the buffer section and a parking section capable of having a plurality of vehicles arranged in the parking area including a region farther than the buffer section from the stopping area.

18. A parking control method in which a plurality of vehicle storage sections for different purposes are set in a parking facility, the parking control method comprising changing an occupancy ratio of each of the vehicle storage sections.

19. A parking control program for a parking control system configured to perform a motion process to move a vehicle between a stopping area in which at least any one of getting in the vehicle and getting out of the vehicle is performed and a parking area in which a vehicle is parked, the parking control program causing a computer to perform processes of:
performing a motion process to move a vehicle between the stopping area and a buffer section capable of having a plurality of vehicles arranged in the parking area; and
performing a motion process to move a vehicle between the buffer section and a parking section capable of having a plurality of vehicles arranged in the parking area including a region farther than the buffer section from the stopping area.

20. A parking control program in which a plurality of vehicle storage sections for different purposes are set in a parking facility, the parking control program causing a computer to perform a process of changing an occupancy ratio of each of the vehicle storage sections.
